# EUROPEAN PATENT APPLICATION

(11) **EP 0 921 653 A2**
(43) Date of publication of application: **09.06.1999**
(21) Application number: 98120150.2
(22) Date of filing: 27.10.1998
(51) Int. Cl.: H04J 14/02

(54) **Apparatus and method for controlling wavelengths and apparatus for transmitting multi-wavelength optical signals**

(30) Priority: 05.12.1997 JP 33562697
(71) Applicant: NEC CORPORATION, Tokyo (JP)
(72) Inventor: Tajima, Tsutomu, Minato-ku, Tokyo (JP)
(74) Representative: VOSSIUS & PARTNER

(57) **Abstract**

An optical mixer couples a plurality of lights to be controlled, each of which has a mutually different wavelength. An optical pulse generator generates an optical pulse from the coupled light, and an optical delay delays input optical pulse according to wavelength components included in the pulse and separates the pulse into plural optical pulses to thereby output those separated optical pulses. A measuring circuit measures the generating time interval between the separated optical pulses, and a control circuit receives the output from the pulse time difference measuring device and controls the wavelengths of the light sources so that the generating time interval is fixed to a predetermined value.

## Description

The present invention relates to an apparatus and a method for controlling wavelengths of lasers, and more particularly to an apparatus and a method for controlling the output wavelengths of a multi-wavelength optical transmitter used in a wavelength-division multiplexed (hereafter WDM) communication system, and to a WDM optical transmitter with a multi-wavelength light source.

WDM transmission technology is recognized as a strong candidate for realizing large capacity optical networks. A multi-wavelength optical transmitter whose output wavelengths are sufficiently stabilized is an indispensable component of a WDM transmission system.

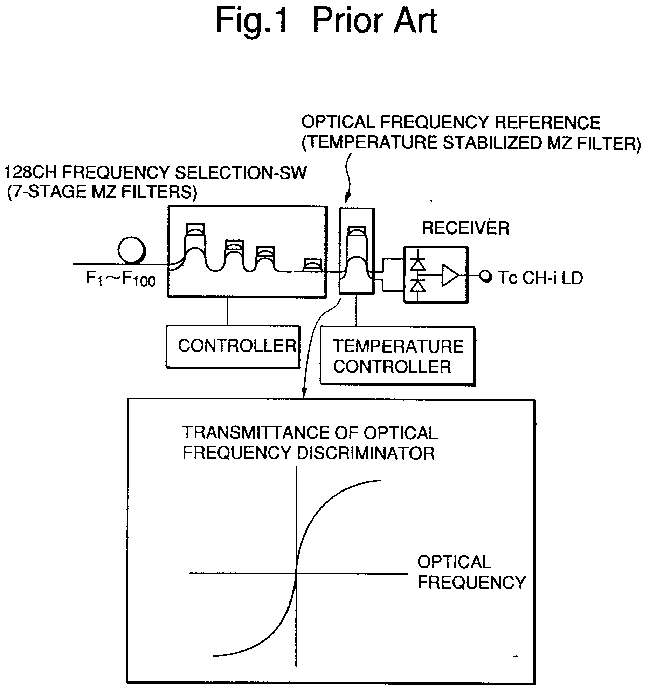

Conventionally, as a method for stabilizing the wavelength of each of a plurality of transmitter laser outputs, each of which is used as a transmitter light source of a WDM communication system, there has been proposed the following method developed by Nosu et al. and described in a paper entitled "100 Channel Optical FDM Technology and Its Applications to Optical FDM Channel-Based Networks", *IEEE Journal of Lightwave Technology,* Vol. 11, No. 5/6. Fig. 1 depicts the configuration of this method.

In this method, the optical output of a multi-way elength light source to be controlled is incident on a Mach-Zehnder type wavelength selector. The wavelength selector is composed of 7-stage Mach-Zehnder interferometer filters, whose transmission wavelengths are controlled by applied voltages to electrodes provided on one of two waveguides forming the Mach-Zehnder interferometer. Each of the applied voltages induces temperature change around the corresponding electrode, which results in refractive index change of the corresponding waveguide. The wavelength selector selects and outputs only one wavelength.

The selected wavelength light is further inputted to a Mach-Zehnder type wavelength discriminator whose output optical power is a monotonous function of wavelength discrepancy compared with a target wavelength. The optical output from the wavelength discriminator is converted to electrical signals and further converted to control signals in a control circuit (not illustrated) for reducing the wavelength discrepancy. The control signal is fed back as a variation of temperature or of injection current applied to the corresponding wavelength light source. Such operations are executed sequentially for each light source composing a multi-wavelength light source by switching the selected wavelength of the above wavelength selector.

In the above conventional method, a wavelength selector is required to switch a selected wavelength according to a signal applied from outside so that each wavelength is individually discriminated. However, commercially available wavelength selectors are expensive at present and this raises the manufacturing cost of the apparatus. In addition, the sequential selection and control algorithm adopted in the above conventional art takes a long time to finish controlling all of the wavelengths. This slow control may delay system setup, and what is worse, may cause wavelength control instability because each wavelength is controlled only intermittently. Furthermore, when a wavelength is selected using the Mach-Zehnder type optical filter which has a transmission periodically changing with wavelength, a wrong wavelength light may be selected due to slight fluctuation of the selection signal applied to the wavelength selector. In this case, the erroneously selected wavelength light is stabilized to an inappropriate wavelength. In addition, when the above optical filter is used for wavelength discrimination, the input wavelength is not uniquely determined only by monitoring optical output from the wavelength discriminating element, so extra means are required to confirm that a selected wavelength is normally set to a predetermined value. With this extra means, the apparatus structure gets complicated.

It is an object of the present invent on to solve the above problems of the conventional technique and to provide an apparatus and a method for controlling wavelengths, which can stabilize a wavelength of each semiconductor laser to a predetermined value without any uncertainty, and with a simple, low cost configuration.

In order to accomplish that goal, according to an aspect of the present invention, the apparatus for controlling a wavelength of at least one laser output to a predetermined value includes an optical delay for delaying said at least one laser output according to the wavelength of said laser output, and a controller for controlling the wavelength of said at least one laser so that said delay is set to a predetermined value.

The above and other objects, features and advantages of the present invention will become more apparant from the following detailed description when taken in conjunction with the accompanying drawings wherein:
Fig. 1 illustrates a conventional wavelength control unit;
Fig. 2 depicts the first embodiment of the present invention;
Fig. 3 indicates the output of an optical pulse generator included in the first embodiment of the present invention;
Fig. 4 illustrates a pulse string output of a high dispersion device included in the first embodiment of the present invention;
Fig. 5 illustrates a pulse time difference measuring device included in the first embodiment of the present invention;
Fig. 6 illustrates logical expressions of a decoder included in the first embodiment of the present invention;
Fig. 7 is a timing chart indicating the operation of the pulse time difference measuring device included in the first embodiment of the present invention;
Fig. 8 depicts a negative feedback circuit;
Fig. 9 illustrates a configuration of a dispersion compensating circuit formed with a silicon waveguide;
Fig. 10 illustrates a configuration of a wavelength multiplexer using fiber gratings and optical circulators;
Fig. 11 tabulates logical expressions of a decoder used to stabilize a wavelength difference from the reference wavelength, included in the configuration of the second embodiment of the present invention;
Fig. 12 is a timing chart indicating the operation of the pulse time difference measuring device that uses a decoder shown in Fig. 11; and
Fig. 13 illustrates the second embodiment of the present invention.

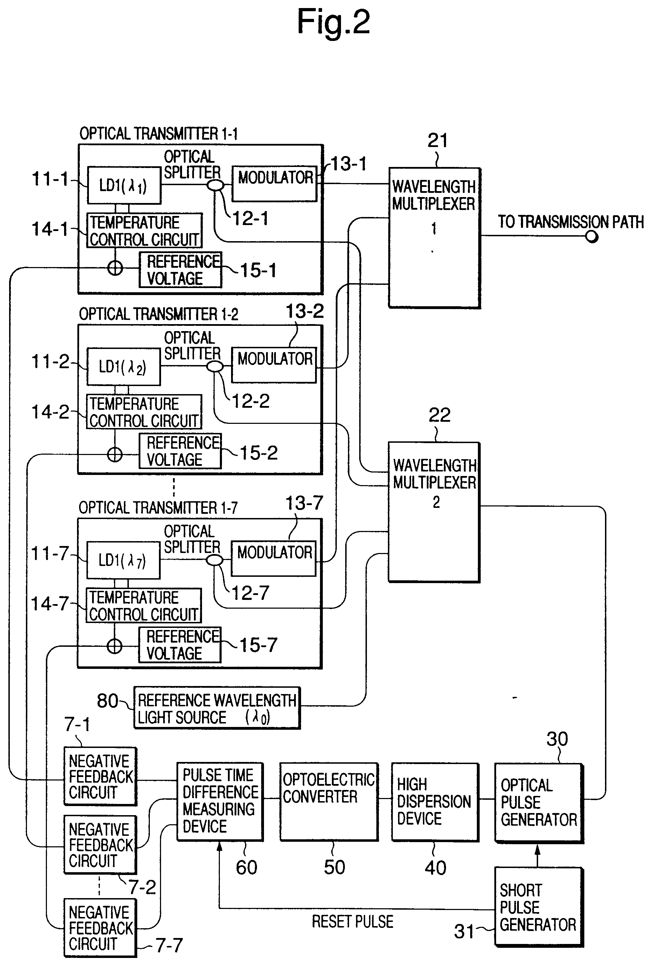

In Fig. 2, the apparatus of the present invention for controlling wavelengths comprises optical transmitters 1-1 to 1-7; wavelength multiplexers 21 and 22; an optical pulse generator 30; a short pulse generator 31; a high dispersion device 40; an optoelectric converter 50; a pulse time difference measuring device 60; negative feedback circuits 7-1 to 7-7; and a reference wavelength light source 80. In this embodiment, the high dispersion device 40 is used as an optical pulse separator. The optical transmitters 1-1 to 1-7 are composed of semiconductor lasers (LD) 11-1 to 11-7; optical splitters 12-1 to 12-7; modulators 13-1 to 13-7; temperature control circuits 14-1 to 14-7; and reference voltage sources 15-1 to 15-7. The optical pulse generator 30 is composed of an optical modulator.

In this embodiment, the oscillation wavelength of each of the semiconductor lasers LD 11-1 to 11-7 is set in the 1550nm band and stabilized with an interval of 5nm. The optical output from each of the semiconductor lasers LD 11-1 to 11-7 has one of seven different wavelengths 1 to 7 respectively and is divided into two by the corresponding optical splitter (12-1 to 12-7). One output of each of the optical splitters 12-1 to 12-7 is modulated with a specified signal in each of the modulators 13-1 to 13-7, and is then transmitted to the wavelength multiplexer 21 and outputted to an optical transmission path as a wavelength multiplexed light. The other output of each of the optical splitters 12-1 to 12-7 is coupled together with the output of the reference wavelength light source 80 in the wavelength multiplexer 22, and is then transmitted to the optical pulse generator 30. As the reference wavelength light source 80, a light source of 1552.4613nm in wavelength is used. The light source wavelength is locked to an HCN gas absorption spectrum line.

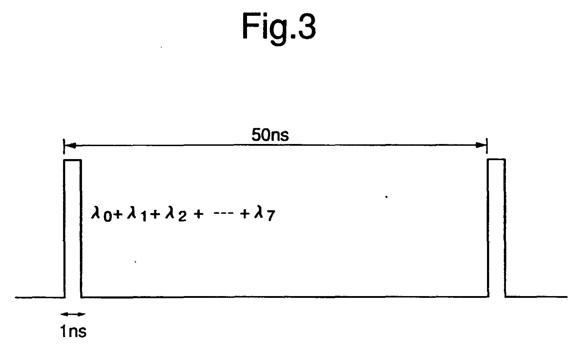

The optical pulse generator 30 outputs optical short pulses of 1ns duration according to the pulses of 1ns duration and 50ns in repetition cycle from the short pulse generator 31. Fig. 3 indicates pulses output from the optical pulse generator 30. These pulses, as shown in Fig. 3, may be regarded as 8(=7+1) overlapped pulses, each of which has a different wavelength from the others.

The output of the optical pulse generator 30 is transmitted to the high dispersion device 40. As the high dispersion device 40, a fiber for dispersion compensation is employed. The dispersion of the dispersion compensation fiber here is -50ps/km/nm (picosecond per kilometer per nanometer) in the 1550nm band. In the present embodiment, this dispersion compensation fiber is used in a 20km length as a high dispersion device 40. Using this fiber, the total dispersion value of the high dispersion device 40 becomes -1000ps/nm. When the wavelength interval is set to 5nm, therefore, the above 8 pulses are emitted from the high dispersion device 40 in order of wavelength at intervals of about 5000ps.

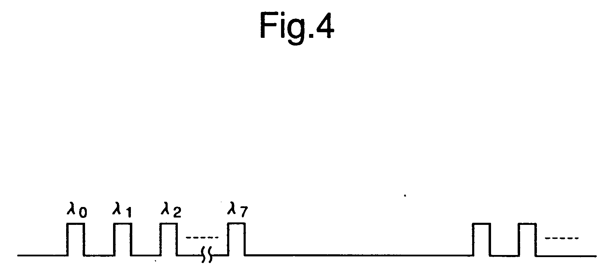

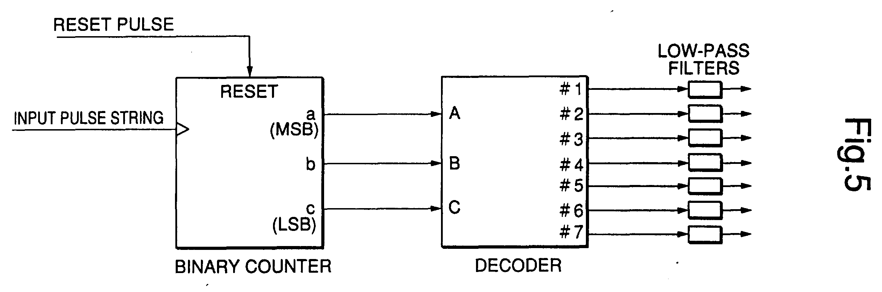

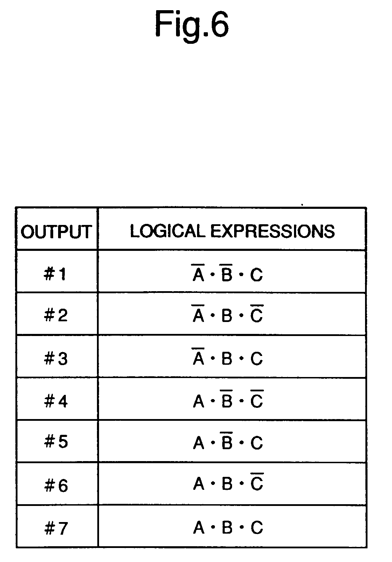

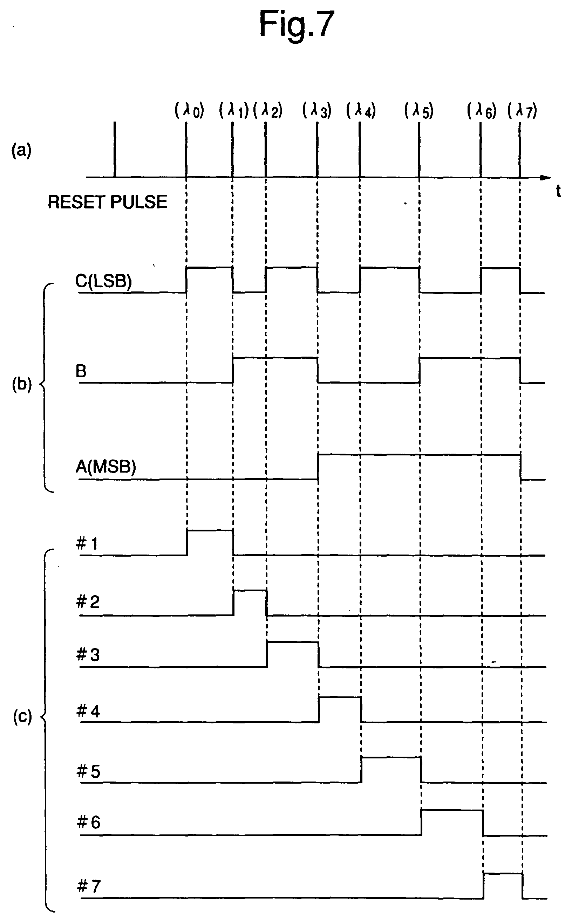

Fig. 4 shows a pulse string appearing in the output of the high dispersion device 40. The output from the high dispersion device 40 is converted to an electrical signal in the optoelectric converter 50, then the time difference between adjacent two pulses in a pulse string composing the inputted electrical signal is measured in the pulse time difference measuring device 60. Fig. 5 shows a configuration of the pulse time difference measuring device 60. Logical expressions for the outputs of the decoder in the pulse time difference measuring device 60 are tabulated in Fig. 6. Fig. 7 is a timing chart indicating the operation of the pulse time difference measuring device 60.

Fig. 6 shows the logical expressions table used for stabilization of adjacent pulse intervals, i.e., adjacent wavelength intervals. The pulse string (see (a) in Fig. 7) inputted to the pulse time difference measuring device 60 is applied to the clock input terminal of a binary counter. And, as a result of the clock pulse counting, the signal shown at (b) in Fig. 7 is outputted. The output from the binary counter is converted to signals (see (c) shown in Fig. 7) by the decoder, as tabulated in Fig. 6. According to the tabulated logic, the signals go to high level only between generation timings for two pulses for which a generation time difference is measured. This signal is transmitted to a low-pass filter having sufficiently low cutoff frequency in the next stage and is converted into a direct current signal whose level is proportional to the high level time rate of the signal. The binary counter is reset periodically by the pulse output from the short pulse generator 31 to thereby set a counting start point. In order that the binary counter is reset just before the start pulse of the pulse string, a delay element (not illustrated) adjusts the timing at which the pulses from the short pulse generator 31 are inputted.

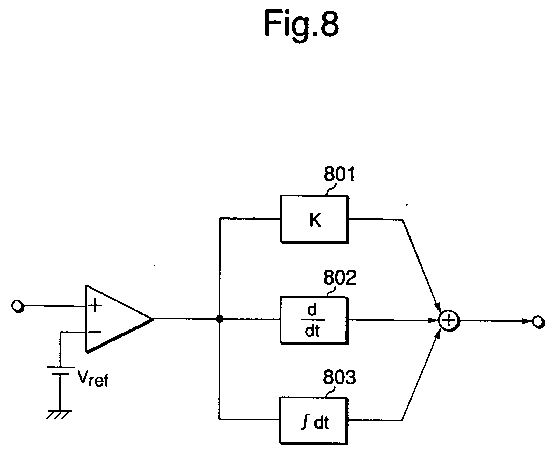

Outputs #1 to #7 from the pulse time difference measuring device 60 are inputted to the negative feedback circuits 7-1 to 7-7, respectively. The negative control circuit is depicted in Fig. 8. As shown in Fig. 8, this circuit includes linear amplifier 801, differentiator 802 and integrator 803 for well-known PID control. Each of the negative feedback circuits 7-1 to 7-7 compares an inputted DC voltage with its own reference voltage to thereby generate a control signal to make the difference between those voltages close to 0 volt and supply the control signal to its corresponding optical transmitter (1-1 to 1-7). Receiving the control signal, the optical transmitter supplies the control signal for a temperature control circuit (14-1 to 14-7) of one of the semiconductor lasers LD1 to LD7 so that the LD temperature is changed properly to thereby make the wavelength closer to a specified one.

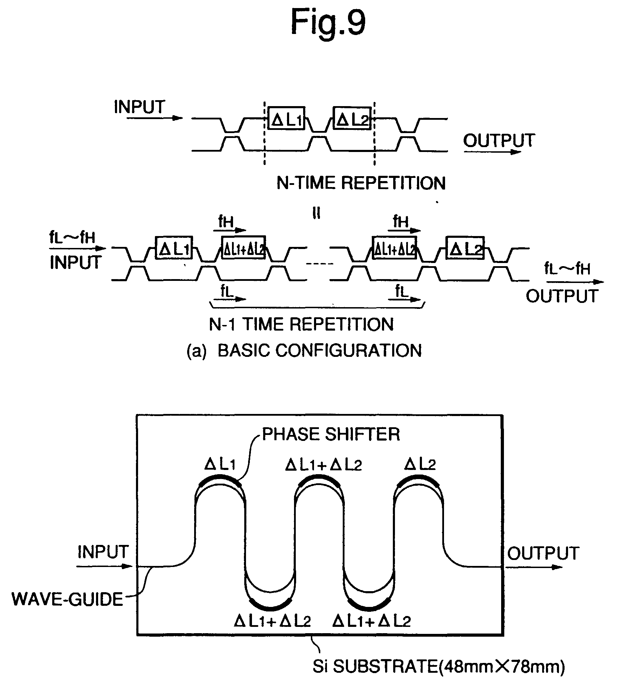

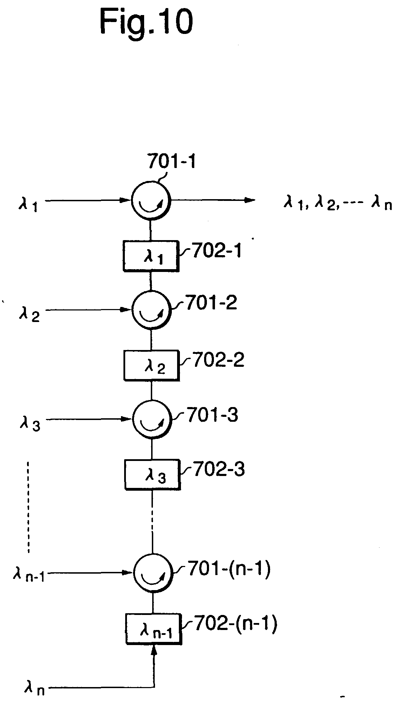

Although dispersion compensating fiber is used as the high dispersion device 40 in this embodiment, it is not the only applicable element. For example, single mode optical fiber whose wavelength dispersion becomes 0 in a wavelength band of 1.3 micrometer or a silicon waveguide may be used to compose the dispersion compensating circuit. Fig. 9 shows an example of such a dispersion compensating circuit. In addition, as the wavelength multiplexers 21 and 22, an arrayed waveguide grating formed on a silicon substrate, a combination of at least one fiber grating and at least one optical circulator, or a tree coupler may be applied. Fig. 10 shows an example of a wavelength multiplexer for multiplexing input lights of wavelengths 1 to n-1 composed of fiber gratings and optical circulators. In Fig. 10, 702-1 to 702-(n-1) are fiber gratings each of which reflect only light with wavelengths of 1 to n-1 respectively and transmits all other light. The circulation direction for each of the circulators 701-1 to 701-(n-1) is indicated in each circulator in Fig. 10. In addition, the number of LDs is not limited only to 7. Any number of LDs can be used by slightly modifying the configuration of the pulse time difference measuring device and the logical expressions for the decoder.

When the number of LDs is changed, it is only needed to increase the countable value of the binary counter in the pulse difference measuring device shown in Fig. 7 to a value over the actual number of LDs, and modify the logic according to the new number of LDs so that the signal goes to the high level between two adjacent pulses just like in Fig. 7.

In the the present embodiment, the wavelength of the reference wavelength light source is locked to an HCN gas absorption spectrum line. However, it is not the only applicable absorption spectrum line. For example, absorption spectrum lines such as acetylene or Kr can also be utilized.

In addition, although each LD temperature is controlled to thereby stabilize the wavelength to a specified one in this example, alternatively or in addition the LD current may be controlled to thereby control the wavelength. In this case, the output from the negative feedback circuit is applied to the injection current applying circuit (not illustrated in Fig. 2) that applies a current to each LD shown in Fig. 2.

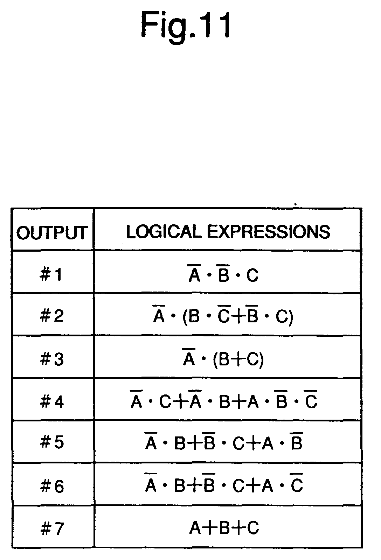

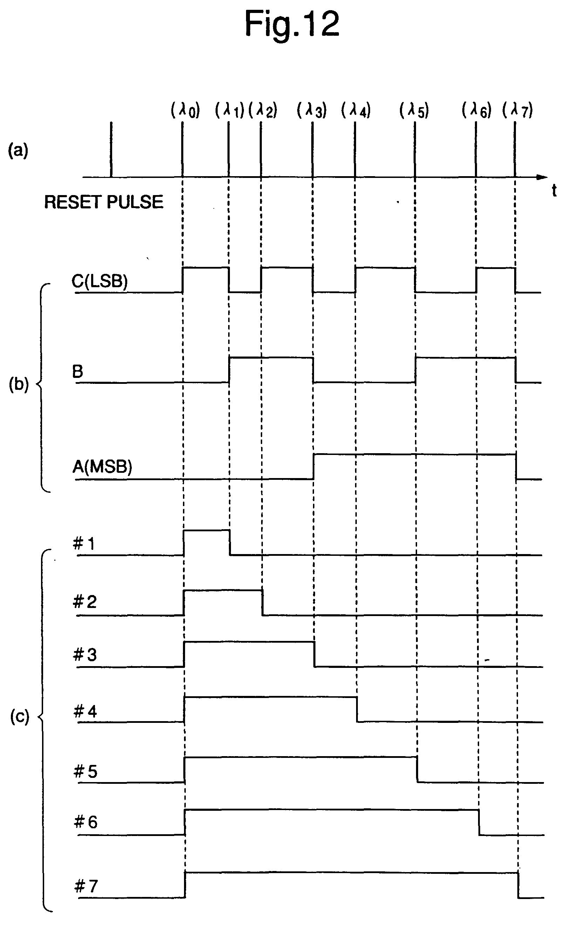

Although in the above embodiment, it is assumed that the interval between adjacent wavelengths should be stabilized, it is also possible to stabilize the difference of each of wavelengths from that of the reference wavelength beam source. In this case, since the wavelength of each laser is compared directly with the absolutely stabilized reference wavelength, it can be expected that each wavelength is set more accurately. In order to realize this scheme, it is only required to replace the logical expressions of each of the decoder outputs used in the pulse time difference measuring device 60 with those shown in Fig. 11. Fig. 12 is a timing chart indicating the operation of the pulse time difference measuring device 60 for this case. For example, the #2 output of the decoder consists of rectangular pulses that go to the high level at an optical pulse timing corresponding to the wavelength 0 and return to the low level at an optical pulse timing corresponding to the wavelength 2.

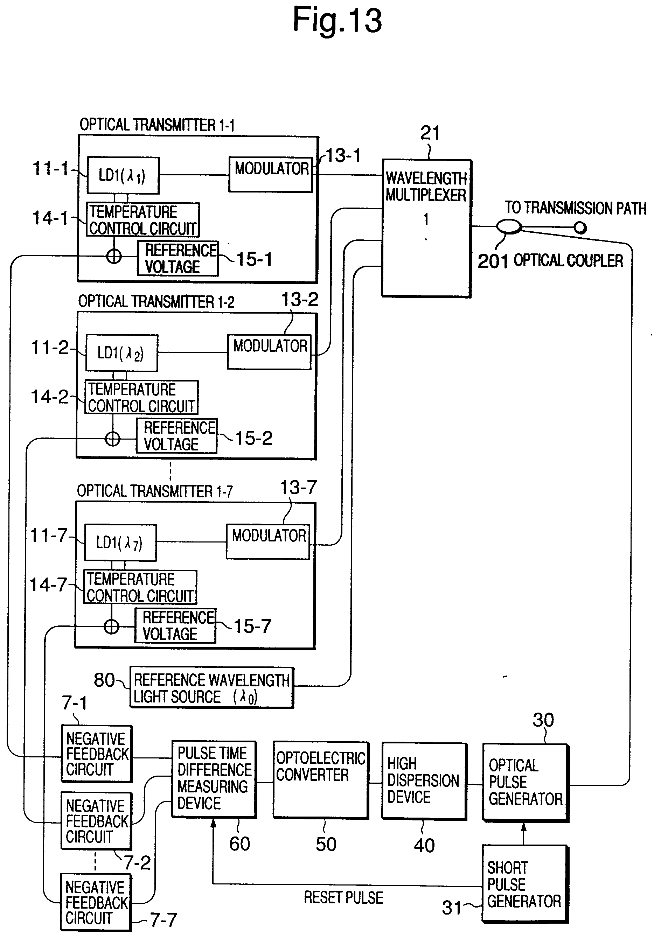

In the FIG. 13 embodiment, multi-wavelength light supplied to a control system including the optical pulse generator 30, etc. is generated by tapping part of the multi-wavelength signal light supplied to the transmission path with an optical coupler 201, which splits the incident light. Such a configuration enables the two wavelength multiplexers 21, 22 in the first embodiment to be reduced to only one 21, so that the manufacturing cost can be further reduced. In Fig. 13, the same components as in Fig. 2 are indicated by the same number. In Fig. 13, unlike the first embodiment, each wavelength light is modulated by a transmission signal. In this case, to assure the arrival of the optical pulse corresponding to each wavelength beam to the pulse time difference measuring device 60, the duration of the pulses outputted from the short pulse generator 31 is set sufficiently longer compared with the single bit duration of the transmission signal. With such a setting, the optoelectric converter 50 is supplied an optical signal in which a plurality of bits corresponding to a transmission signal are included within an optical pulse duration. The optoelectric converter 50 smoothes pulses, each containing such a plurality of bits to thereby shape those pulses into a simple one pulse form. The converter 50 then outputs those smoothed signals.

As described above, the present invention employs a high dispersion device that can be composed of a single passive device such as an optical fiber or a silicon substrate, so that the wavelength control device structure can be simplified. Furthermore, in the present invention, each input wavelength is discriminated using wavelengh characteristics for the transmission delay time of a high dispersion device which changes monotonously with respect to a wavelength. Each input wavelength can thus be decided uniquely from the output of a wavelength discriminating element, which also contributes to simplification of the apparatus structure.

In addition, the present invention applies a control signal to each light source almost continuously, not intermittently. Therefore, control stability improvement can be expected.

Furthermore, when adopting an additional absolutely stabilized reference wavelength light source in the present invention, it is possible to absolutely stabilize each wavelength obtained by controlling the wavelength interval of the multi-wavelength light source to a fixed value. It is thus possible to apply the present invention to adjust each light source wavelength to a wavelength recommended for WDM optical communications, which is being currently standardized by the ITU (International Telecommunications Union).

Furthermore, in the present invention, the wavelength interval of each multi-wavelength light source is converted to a pulse width, and this pulse width is further converted to a DC level using a low-pass filter. And, each laser wavelength is controlled so that this DC level matches with the reference voltage held in the negative feedback circuit provided for each laser. Thus, it is only needed to set a target control voltage in the negative feedback circuit to set a wavelength interval. The target control voltage can also be changed very easily.

Furthermore, in the present invention, the wavelengths of lasers can be disposed at uneven intervals, simply by setting the above reference voltage differently for each laser. It is thus possible to suppress four wave mixing, which is one of the factors that degrade the transmission properties of conventional WDM optical transmission systems.

While this invention has been described in connection with certain preferred embodiments, it is to be understood that the subject matter encompassed by way of this invention is not to be limited to those specific embodiments. On the contrary, it is intended for the subject matter of the invention to include all alternatives, modifications and equivalents as can be included within the spirit and scope of the following claims.

## Claims

1. An apparatus for controlling a wavelength of at least one laser output to a predetermined value, comprising:
an optical delay for delaying said at least one laser output according to the wavelength of said laser output; and
a controller for controlling the wavelength of said at least one laser so that said delay is set to a predetermined value.

2. The apparatus as defined in claim 1, wherein
said controller includes:
a measuring circuit for measuring said delay; and
a control circuit for receiving signals from said measuring circuit and controlling the wavelengths of said at least one laser so that said delay is kept at said predetermined value.

3. The apparatus as defined in claim 2, wherein
said at least one laser comprises a plurality of lasers with mutually different wavelengths;
said optical delay comprises an optical pulse generator for generating optical pulses from outputs of said plurality of lasers and an optical pulse separator for delaying said optical pulses according to their respective wavelengths to thereby separate said optical pulses to a plurality of separated optical pulses and output said separated optical pulses;
said measuring circuit comprises a pulse time difference measuring circuit for measuring the generating time interval between said separated optical pulses; and
said control circuit controls wavelengths of said plurality of lasers so that said generating time interval assumes said predetermined value.

4. The apparatus as defined in claim 3, further comprising an optical mixer for mixing the outputs of said plurality of lasers and providing said optical pulse generator with mixed light.

5. The apparatus as defined in claim 3 or 4, wherein said plurality of lasers comprises a reference wavelength light source whose wavelength is stabilized with reference to an atomic or a molecular absorption spectrum line.

6. The apparatus as defined in claim 4 or 5, wherein said optical mixer includes a wavelength multiplexer.

7. The apparatus as defined in claim 6, wherein said wavelength multiplexer includes a fiber Bragg grating.

8. The apparatus as defined in claim 6 or 7, wherein said wavelength multiplexer includes an arrayed waveguide grating formed on a silicon substrate.

9. The apparatus as defined in any one of claims 4 to 8, wherein said optical mixer includes an optical tree coupler.

10. The apparatus as defined in any one of claims 3 to 9, wherein said optical pulse generator includes an optical modulator.

11. The apparatus as defined in any one of claims 3 to 10, wherein said optical pulse separator includes a single mode optical fiber whose wavelength dispersion is 0 in the 1.3 micrometer wavelength band.

12. The apparatus as defined in any one of claims 3 to 11, wherein said optical pulse separator includes a dispersion compensating optical fiber.

13. The apparatus as defined in any one of claims 3 to 12, wherein said optical pulse separator includes a dispersion compensating circuit using an optical waveguide on a silicon substrate.

14. The apparatus as defined in any one of claims 3 to 13, wherein said plurality of lasers include semiconductor lasers and said control circuit controls the temperatures of said semiconductor lasers.

15. The apparatus as defined in any one of claims 3 to 14, wherein said plurality of lasers include semiconductor lasers and said control circuit controls injection currents applied to said semiconductor lasers.

16. The apparatus as defined in any one of claims 3 to 15, wherein said generating time interval is measured between two adjacent pulses.

17. The apparatus as defined in claim 16, wherein said predetermined value for generating time interval is set to a mutually different value for each of said plurality of lasers.

18. The apparatus as defined in any one of claims 3 to 17, wherein said generating time interval is measured between each of said plurality of pulses and a predetermined specific pulse.

19. An optical transmitter for transmitting multi-wavelength light after multiplexing a plurality of laser outputs, comprising:
an optical pulse generator for generating an optical pulse from said plurality of laser outputs;
an optical delay for delaying said optical pulse according to is wavelength and separating said optical pulse into a plurality of separated optical pulses and outputting said separated optical pulses;
a measuring circuit for measuring the generating time interval between said separated optical pulses; and
a control circuit for receiving the output from said measuring circuit and controlling the wavelengths of said plurality of lasers so that said generating time interval becomes a predetermined fixed value.

20. The optical transmitter as defined in claim 19, further comprising an optical mixer for mixing a part of each of said plurality of laser outputs and providing said optical pulse generator with mixed light.

21. The optical transmitter as defined in claim 19 or 20, further comprising an optical splitter for splitting said multi-wavelength light and providing said optical pulse generator with said split light.

22. A method for controlling the wavelength of at least one laser output to a predetermined fixed value, comprising steps of
delaying each of said at least one laser output according to its wavelength; and
controlling said at least one laser so that said delay is kept at a predetermined fixed value.

23. The method as defined in claim 22, wherein said step of delaying comprises steps of:
converting said at least one laser output to an optical pulse; and
delaying said optical pulse according to its wavelength.

24. The method as defined in claim 23, wherein said at least one laser comprises a plurality of lasers with mutually different wavelengths, and wherein said delay changes monotonously with wavelength.

25. The method as defined in claim 24, wherein said plurality of lasers include a reference wavelength light source.
